# FASCICULE DE BREVET EUROPEEN

(11) **EP 3 065 982 B1**
(45) Date de publication et mention de la délivrance du brevet: **03.07.2019**
(21) Numéro de dépôt: 14786227.0
(22) Date de dépôt: 22.09.2014
(51) Int. Cl.: B60W 20/00, B60K 6/48, F16H 61/02

(54) **PROCÉDÉ DE CONTRÔLE DE L'ÉTAT D'UN CHAÎNE DE TRANSMISSION CINÉMATIQUE, SYSTÈME DE TRANSMISSION CINÉMATIQUE ET VÉHICULE AUTOMOBILE ASSOCIÉ**
VERFAHREN ZUR STEUERUNG DES ZUSTANDS EINES ANTRIEBSSTRANGS, ANTRIEBSSTRANGSYSTEM UND ZUGEHÖRIGES KRAFTFAHRZEUG
METHOD OF CONTROLLING THE STATE OF A DRIVETRAIN, DRIVETRAIN SYSTEM AND ASSOCIATED AUTOMOTIVE VEHICLE

(30) Priorité: 08.11.2013 FR 1360968
(43) Date de publication de la demande: 14.09.2016
(73) Titulaire: Renault s.a.s, 92100 Boulogne-Billancourt (FR)
(72) Inventeur: PLANCHE, Grégory, F-91400 Orsay (FR); ROUDEAU, Frédéric, F-VITRY SUR SEINE 94400 (FR); LEFEVRE, Aurélien, F-92190 Meudon (FR)
(86) Numéro de dépôt international: PCT/FR2014/052345
(87) Numéro de publication internationale: WO 2015/067863

(56) Documents cités:
- WO-A1-2013/001206
- DE-A1-102005 049 667
- DE-A1-102008 042 132

## Description

L'invention a pour objet les systèmes de transmission d'énergie entre un moteur de véhicule automobile et une ou plusieurs roues du véhicule et en particulier les procédés de gestion de tels systèmes de transmission. Le véhicule peut en particulier être un véhicule hybride.

Une chaîne de transmission comprend typiquement un ensemble de coupleurs et réducteurs pouvant relier un ou plusieurs moteurs d'un groupe motopropulseur et un ou plusieurs groupes de roues motrices du véhicule. La chaîne de transmission cinématique peut occuper différents états cinématiques, chaque état cinématique étant défini par un schéma d'engagement des coupleurs et réducteurs. Un état cinématique peut par exemple correspondre à un découplage total entre tous les moteurs et toutes les roues du véhicule, les roues du véhicule étant laissées soit libres en rotation, soit bloquées en rotation. La chaîne de transmission comprend généralement également plusieurs états cinématiques permettant chacun de relier au moins un moteur à au moins un groupe de roues motrices afin de faire avancer le véhicule.

La sélection d'un état cinématique se fait essentiellement à partir du couple aux roues demandé par le conducteur, -demandé par exemple en appuyant sur une pédale d'accélération-, et de la vitesse actuelle de rotation des roues du véhicule. La sélection peut également prendre en compte d'autres paramètres, tels que les réserves de carburant de différents types disponibles (combustible fossile, réserve d'énergie dans des batteries électriques), le lieu où roule le véhicule (ville ou campagne), le confort acoustique, et l'agrément de conduite. Certains états cinématiques doivent être interdits car le point de fonctionnement (couple, vitesse de rotation) qu'aurait dans cet état cinématique au moins un des moteurs sollicités, n'est pas accessible pour ce moteur. Il est donc nécessaire, avant d'effectuer un changement d'état cinématique, de vérifier si les points de fonctionnement de chacun des moteurs sollicités par cet état cinématique, sont des points de fonctionnement autorisés pour ce moteur. Une telle démarche peut s'avérer compliquée, car elle amène à recalculer le point de fonctionnement de chaque moteur pour chaque état cinématique, en fonction de l'état de vitesse actuelle du véhicule. En outre, le changement d'état cinématique n'étant pas instantané, le point de fonctionnement effectif des moteurs en fin de changement d'état cinématique risque d'être différent du point de fonctionnement correspondant aux paramètres actuels d'avancement du véhicule, et au moins un des moteurs sollicités risque de se retrouver en surrégime.

On peut se referrer au document WO 2013/001206 - A1 qui décrit un procédé de contrôle d'une boite de vitesses pour véhicule automobile.

L'invention a pour but de proposer un procédé de gestion des états cinématiques d'un véhicule, qui est simple à mettre en oeuvre, et qui permet de prendre en compte l'évolution de l'état du véhicule au cours du changement d'état cinématique.

A cette fin, l'invention propose un procédé de contrôle de l'état d'une chaîne de transmission cinématique d'un véhicule automobile, notamment d'un véhicule automobile à propulsion hybride. La chaîne de transmission comprend un ensemble de coupleurs et réducteurs entre un groupe motopropulseur du véhicule et une ou plusieurs roues motrices du véhicule. Le groupe motopropulseur peut comprendre un moteur thermique. Le groupe motopropulseur peut comprendre au moins un moteur électrique. La chaîne de transmission cinématique peut comprendre plusieurs états cinématiques définis chacun par un schéma d'engagements des coupleurs et réducteurs permettant de relier un moteur du groupe motopropulseur à au moins une roue motrice. Dans le procédé, on calcule une vitesse de fin de changement d'état avant d'effectuer un changement d'état cinématique, en fonction d'une vitesse actuelle du véhicule, de l'état cinématique actuel du véhicule et d'un état cinématique envisagé différent de l'état actuel. On compare cette vitesse de fin de changement d'état à un seuil. Le seuil peut être une valeur tabulée en fonction de l'état cinématique envisagé. Selon un mode de réalisation avantageux, le groupe motopropulseur peut comprendre plusieurs moteurs, c'est-à-dire plusieurs sources d'énergie motrice pouvant être actionnés et reliés à des roues motrices indépendamment les uns des autres. Plusieurs moteurs peuvent être associés à une même roue ou à un même groupe de roues motrices. Plusieurs moteurs peuvent être associés chacun à un groupe de roues motrices différent. Selon les variantes de réalisation, plusieurs moteurs, c'est-à-dire plusieurs sources d'énergie motrice peuvent être actionnés et reliés simultanément aux roues dans au moins une partie des états cinématiques disponibles. Dans certains états cinématiques, au moins un des moteurs connecté à une roue motrice peut être utilisé pour fournir une énergie de freinage, éventuellement convertie en énergie électrique. Selon des variantes de réalisation, le procédé peut être appliqué à une chaîne de transmission cinématique ne reliant qu'un seul moteur, suivant différents trajets cinématiques, aux roues du véhicule.

Pour calculer la vitesse de fin de changement d'état, on multiplie un premier incrément de temps par une première force de traction. De manière préférentielle, le premier incrément de temps comprend un terme tabulé à la fois en fonction de l'état cinématique actuel et de l'état cinématique envisagé. Selon un mode de réalisation préférentiel, le premier incrément de temps peut en outre comprendre un terme supplémentaire si un moteur utilisé pour l'état cinématique envisagé est actuellement au repos, et doit être mis en route pour mettre la chaîne de transmission dans l'état cinématique envisagé, notamment si un moteur thermique doit être mis en route.

La valeur retenue pour la première force de traction est calculée en utilisant la plus petite valeur entre une force de traction de consigne et une force de traction issue d'une première cartographie reliant la vitesse du véhicule et une force de traction. La force de traction de consigne est par exemple une consigne calculée à partir du signal d'une pédale d'accélération du véhicule.

De manière avantageuse, la première cartographie est sélectionnée parmi plusieurs cartographies en fonction du couple formé par l'état cinématique actuel, et l'état cinématique envisagé. De fait, la première force de traction tabulée par la première cartographie est la force de traction maximale disponible aux roues du véhicule en fonction de la vitesse du véhicule, lors de l'établissement d'un état cinématique intermédiaire. Cet état cinématique intermédiaire est un état qui subsiste ou qui est mis en place jusqu'à l'établissement de l'état envisagé. Ce peut être un état avec rupture du couple aux roues, ou ce peut être un état permettant de maintenir au moins une partie du couple aux roues. A titre d'illustration, l'état cinématique intermédiaire peut être un état dans lequel certaines roues du véhicule sont entraînées par un moteur électrique, pour passer d'un état où le véhicule est mû uniquement par un ou plusieurs moteurs électriques, à un état où le véhicule est mû au moins partiellement par un moteur thermique. Dans certains cas, l'état de transition est l'état cinématique initial.

Selon un mode de réalisation préféré, pour calculer la vitesse de fin de changement d'état, on multiplie en outre un second incrément de temps par une seconde force de traction. De manière préférentielle, le second incrément de temps est constant, ou est une valeur constante tabulée en fonction de l'état cinématique envisagé correspondant par exemple à une durée minimale souhaitée sur le nouvel état cinématique. Le produit du second incrément de temps par la seconde force de traction est ajouté au produit du premier incrément de temps par la première force de traction. Le premier et le second incrément de temps peuvent être remplacés par deux valeurs qui sont proportionnelles à des incréments de temps, par exemple un incrément de temps divisé par une masse du véhicule. Le second incrément de temps peut être de l'ordre de 1 à 4s, et de préférence compris entre 1,5s et 2s. Le premier incrément de temps peut être la somme d'une première valeur qui peut être constante ou tabulée et qui est comprise entre 0,2s et 4s, et de préférence comprise entre 0,5s et 2,5s, et d'une seconde valeur qui n'est ajoutée que pour certains des états cinématiques (par exemple quand il faut démarrer un moteur), et qui est comprise entre 0,5s, et 3s et de préférence entre 1 et 2s.

Selon un mode de réalisation préféré, pour calculer la seconde force de traction, on utilise la plus petite valeur entre une force de traction de consigne et une force de traction issue d'une seconde cartographie reliant la vitesse du véhicule et une force de traction. La seconde force de traction représentée sur la seconde cartographie correspond à la force maximale qui serait disponible aux roues, pour la vitesse actuelle du véhicule, si le véhicule se trouvait déjà dans l'état envisagé. Il est possible d'utiliser des cartographies de couples aux roues du véhicule au lieu des cartographies de force de traction linéaire, et de diviser par la suite les valeurs obtenues par le rayon des roues du véhicule, en intégrant par exemple l'inverse des roues dans un coefficient multiplicateur. Le coefficient multiplicateur peut aussi intégrer l'inverse de la masse du véhicule.

On reste dans le cadre de l'invention si, au lieu de multiplier dans un premier temps les forces par des incréments de temps, on multiplie directement par des coefficients multiplicateurs intégrant non seulement un des incréments de temps à prendre en compte, mais aussi, suivant les variantes de réalisation, l'inverse de la masse du véhicule, et au besoin l'inverse du rayon des roues. Le coefficient multiplicateur est alors le produit d'un incrément de temps par l'inverse de la masse du véhicule, et au besoin par l'inverse du rayon des roues.

De manière avantageuse, on peut, pour chaque état cinématique, sélectionner la seconde cartographie parmi un groupe de cartographies reliant chacune la vitesse de rotation des roues, et une force maximale de traction du véhicule disponible pour un des états cinématiques de la chaîne de traction du véhicule. On utilise la cartographie correspondant à l'état cinématique envisagé. La chaîne de traction peut bien sûr être une chaîne de propulsion si le couple moteur est transmis aux roues arrière du véhicule.

Selon un mode de réalisation préférentiel, lors du calcul de la vitesse de fin de changement d'état, on soustrait à au moins une des forces prises en compte, une force résistive calculée notamment en fonction de l'historique d'une force de traction aux roues du véhicule, et d'un historique de vitesse du véhicule. La force résistive peut être calculée par un bilan de conservation d'énergie pour prendre en compte la pente de la chaussée et les forces de frottement s'opposant à l'avancement du véhicule. De manière préférentielle, on soustrait la force résistive à la première force de traction et, si elle est prise en compte on soustrait également la force résistive à la seconde force de traction.

En multipliant chacune des différences de forces par l'incrément de temps considéré, et en la divisant par la masse du véhicule, on obtient ainsi les variations de vitesses du véhicule pendant le premier et pendant le second incrément de temps. En additionnant ces variations de vitesse, on obtient une variation potentielle de vitesse du véhicule pendant le changement d'état cinématique envisagé.

Avantageusement, on compare la vitesse théorique en fin de changement d'état à un seuil qui est fonction de l'état cinématique envisagé, et on interdit au moins temporairement le changement d'état vers cet état cinématique si la vitesse théorique est supérieure audit seuil.

L'invention propose également un système de transmission cinématique pour véhicule automobile, notamment pour véhicule automobile à propulsion hybride, le système comprenant un ensemble de coupleurs et réducteurs aptes à relier une ou plusieurs roues motrices du véhicule avec un groupe motopropulseur du véhicule. La chaîne de transmission cinématique peut prendre plusieurs états cinématiques définis chacun par un schéma d'engagements des coupleurs et réducteurs permettant de relier un moteur du groupe motopropulseur à au moins une roue motrice. Le système comprend une unité de commande électronique configurée pour calculer une vitesse de fin de changement d'état avant d'effectuer un changement d'état cinématique, en fonction d'une vitesse mesurée du véhicule, de l'état cinématique actuel du système de transmission et d'un état cinématique envisagé différent de l'état actuel, et pour comparer la vitesse de fin de changement d'état calculée à un seuil. Le véhicule peut être un véhicule à motorisation hybride ou peut être un véhicule avec un seul moteur. L'invention est en particulier avantageuse pour les véhicules hybrides, dont le système de motorisation peut présenter de nombreux états cinématiques différents parmi lesquels il est nécessaire d'effectuer un arbitrage. L'invention peut également s'appliquer à un véhicule avec une motorisation unique, afin d'autoriser ou d'interdire certains passages de vitesses.

Pour calculer la vitesse (V_fin) de fin de changement d'état, l'unité de commande électronique (10) est configurée pour multiplier un premier incrément de temps (δt_{tran_total}) par une première force de traction (mAccₜᵣₐₙₛ).

Pour calculer la première force de traction (mAccₜᵣₐₙₛ), l'unité de commande électronique (10) est configurée pour utiliser la plus petite valeur d'une force de traction de consigne (F_{cons}) et d'une force de traction (F_{max_trans}) issue d'une première cartographie (15a) reliant la vitesse du véhicule (V) et une force de traction

L'invention propose en outre un véhicule automobile à propulsion hybride comprenant un système de transmission tel que décrit précédemment, le système de transmission pouvant occuper différents état cinématiques, dont au moins un état cinématique dans lequel le couple aux roues peut être fourni au moins partiellement par un premier moteur thermique, au moins un état cinématique distinct du précédent dans lequel le couple aux roues peut être fourni au moins partiellement par un moteur électrique, et comprenant une unité de commande électronique configurée pour interdire, par intervalles de temps, une partie des états cinématiques, en fonction notamment de l'état cinématique actuel du système de transmission, de la vitesse du véhicule et de l'historique de vitesse du véhicule.

D'autres buts, caractéristiques et avantage de l'invention apparaîtront à la lecture de la description suivante, donnée uniquement à titre d'exemple non limitatif, et faite en référence aux figures annexées sur lesquelles :
- la figure 1 est la représentation schématique d'un véhicule équipé d'un système de transmission cinématique selon l'invention,
- la figure 2 est un algorithme simplifié d'un procédé de gestion d'une chaîne cinématique selon l'invention,
- la figure 3 est un exemple simplifié de cartographie utilisée dans un procédé de gestion selon l'invention.

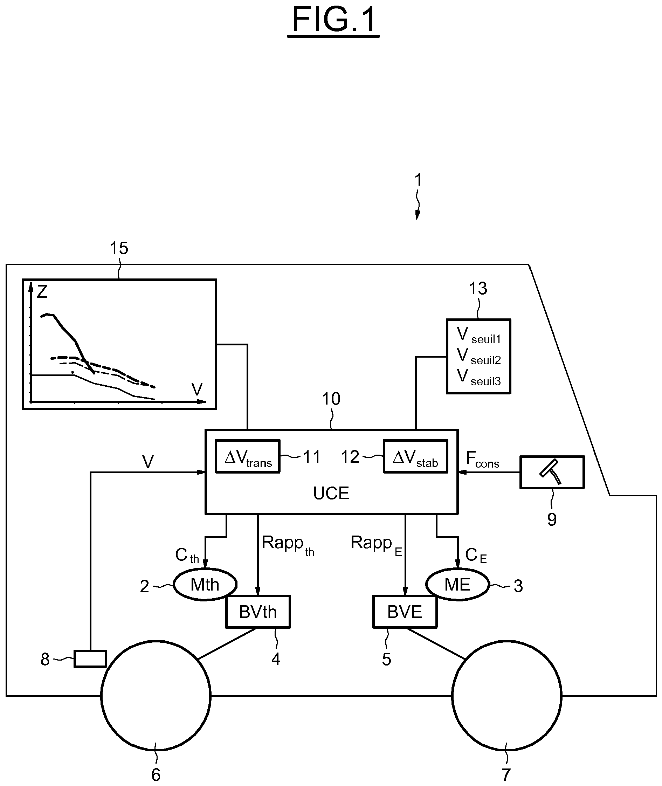

Tel qu'illustré sur la figure 1, un véhicule 1 à propulsion hybride comprend un moteur thermique 2, un moteur électrique 3, une boîte de vitesses 4 ("BVth") associée au moteur thermique, éventuellement une boîte de vitesse 5 ("BVE") associée au moteur électrique 3, un capteur de vitesse 8 permettant d'estimer la vitesse d'au moins une roue du véhicule, une pédale d'accélération 9 et une unité de commande électronique 10 permettant d'imposer à la fois une consigne de couple Cₜₕ au moteur thermique et une consigne de couple C_{E} au moteur électrique 3. L'unité de commande électronique 10 est configurée pour délivrer une consigne Rappₜₕ imposant le positionnement de différents coupleurs et réducteurs de la boîte de vitesses 4 associée au moteur thermique, pour obtenir un certain état de rapport de vitesse entre l'entrée et la sortie de la boîte 4. L'unité de commande électronique 10 est configurée pour délivrer une consigne Rapp_{E} imposant le positionnement de différents coupleurs et réducteurs de la boîte de vitesses 5 associée au moteur électrique pour obtenir un certain état de rapport de vitesse entre l'entrée et la sortie de la boîte 5. Les consignes Rappₜₕ et Rapp_{E} définissent ensemble une consigne d'état cinématique de la chaîne de transmission du véhicule.

L'unité de commande électronique 10 comprend un premier module de calcul 11 configuré pour calculer une variation de vitesse du véhicule, que le véhicule est susceptible d'acquérir pendant un changement d'état cinématique envisagé, et comprend un second module de calcul 12 configuré pour calculer un second incrément de vitesse que le véhicule est susceptible d'acquérir pendant un intervalle de temps dit de « stabilisation » après le changement d'état cinématique. L'incrément de temps de stabilisation peut par exemple correspondre à une durée minimale pendant laquelle on juge opportun de laisser la chaîne de transmission dans le nouvel état, une fois le changement d'état cinématique effectué. Cet intervalle de temps peut être prévu pour être suffisamment long pour pouvoir organiser un nouveau changement d'état cinématique, au cas où l'état cinématique en cours ne serait plus pertinent une fois effectué (par exemple suite à une nouvelle consigne à la pédale).

Les modules de calcul 11 et 12 utilisent, pour calculer le premier et le second incrément de vitesse, une série de cartographies 15 reliant pour chaque état cinématique de la chaîne de transmission, la force de traction disponible aux roues à la vitesse linéaire du véhicule. Bien sûr, en fonction des variantes de réalisation, les cartographies peuvent comporter comme données d'entrée un couple aux roues au lieu d'une force de traction aux roues et peuvent comporter en ordonnée une vitesse de rotation de roues au lieu d'une vitesse linéaire du véhicule.

Un changement d'état cinématique peut être suscité au niveau de l'unité de commande électronique 10, par exemple suite à une modification de la consigne de la pédale d'accélération, suite au franchissement d'un seuil concernant une ou plusieurs réserves d'énergie du véhicule, suite à une demande du conducteur d'utiliser une source d'énergie préférentielle, ou suite à une demande du conducteur de limiter le niveau d'émissions polluantes. L'unité de commande électronique 10 estime alors, pour plusieurs états cinématiques qui sont envisageables pour répondre aux critères précédents, quelle sera la vitesse du véhicule après le changement d'état cinématique et la phase de stabilisation. L'unité de commande vérifie, à l'aide d'une valeur tabulée dans un tableau 13 de vitesses limites si la vitesse acquise par le véhicule à la fin du changement d'état cinématique est compatible avec une vitesse limite correspondant à cet état cinématique envisagé.

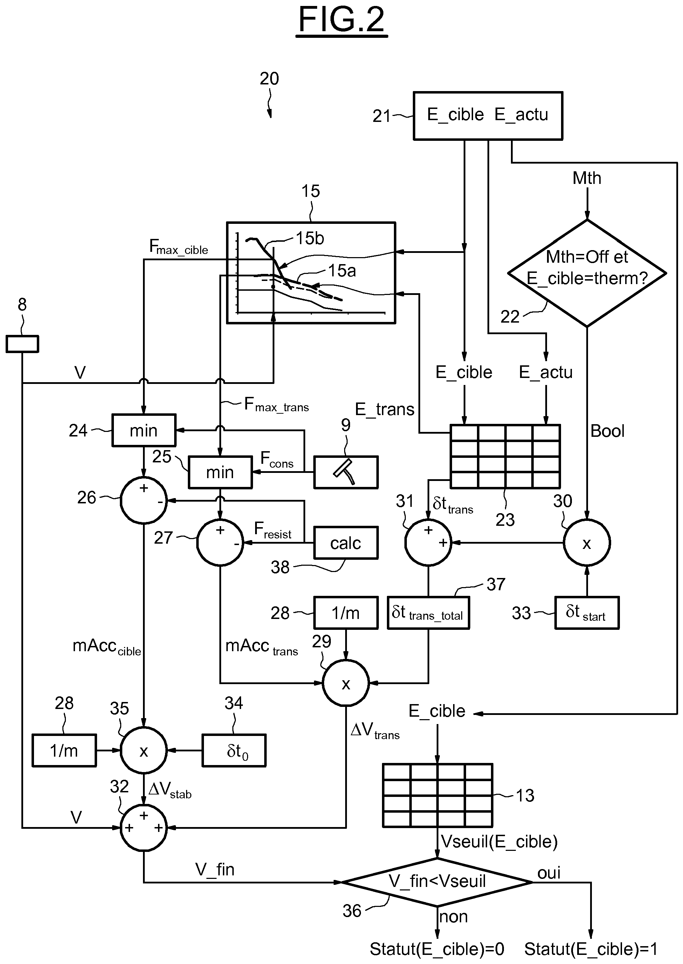

La figure 2 illustre un algorithme simplifié 20 du procédé d'élimination ou d'autorisation d'états cinématiques envisageables, utilisés par l'unité de commande électronique 10 du véhicule de la figure 1.

On retrouve sur la figure 2 des éléments communs à la figure 1, les mêmes éléments étant désignés par les mêmes références.

Tel qu'illustré sur la figure 1, à une étape 21, l'unité de commande électronique 10 décide d'explorer la possibilité de passer d'un état cinématique E_actu à un état cinématique E_cible. A cette fin, l'unité de commande électronique 10 vient lire dans un ou plusieurs tableaux 23, d'une part un identifiant "E_trans" d'un état cinématique transitoire qui est prévu pour s'établir lors du changement cinématique du premier état cinématique E_actu vers l'état cinématique envisagé E_cible. Elle vient également lire dans le tableau 23, ou dans un autre tableau, une valeur d'intervalle de temps δtₜᵣₐₙₛ correspondant à une durée nécessaire pour effectuer le changement d'état cinématique de l'état cinématique actuel E_actu à l'état cinématique envisagé E_cible. Par mesure de sécurité, l'intervalle de temps δtₜᵣₐₙₛ peut être légèrement surestimé par rapport aux valeurs connues expérimentalement pour ce type de transition cinématique. L'unité de commande électronique 10 utilise l'indicateur E_trans de l'état cinématique transitoire pour venir lire dans la série de cartographies 15, d'une part une première courbe 15a associée à cet état cinématique transitoire, et d'autre part une seconde courbe 15b associée à l'état cinématique E_cible envisagé. Sur les courbes 15a et 15b, l'unité de commande électronique 10 relève, pour la valeur de vitesse V obtenue à l'aide du capteur de vitesse de roue 8, respectivement une première force de traction F_{max_trans} et une seconde force de traction F_{max_cible}, correspondant respectivement à la force de traction maximale aux roues que la chaîne de transmission peut appliquer aux roues dans l'état cinématique transitoire, pour la vitesse Vactuelle du véhicule, et à la force de traction maximale aux roues que la chaîne cinématique peut appliquer aux roues pour l'état cinématique envisagé. Les courbes reliant la force de traction et la vitesse étant généralement décroissante, lorsque le véhicule se trouve en phase d'accélération, les valeurs F_{max_trans} et F_{max_cible} sont aussi des valeurs maximales de force de traction que la chaîne de transmission peut appliquer aux roues non seulement pour la vitesse actuelle du véhicule, mais également pour les vitesses éventuellement acquises pendant le changement d'état cinématique. Les valeurs de force F_{max_trans} et F_{max_cible} sont envoyées respectivement vers un opérateur de sélection 25 et un opérateur de sélection 24. Les opérateurs de sélection 25 et 24 sélectionnent chacun la plus petite des valeurs entre la valeur lui parvenant du groupe de cartographies 15, et une valeur F_{cons} représentant une force de traction de consigne aux roues, calculée à partir de la position de la pédale d'accélération 9. Les valeurs issues des opérateurs de sélection 24 et 25 sont donc les valeurs maximales de force de traction -ou de couple- aux roues susceptibles d'être développées respectivement pendant la phase de stabilisation et pendant la phase de changement d'état cinématique, suivant que la consigne de la pédale d'accélération excède ou non le couple maximal inventorié dans les cartographies 15. Chacune de ces forces maximales est ensuite envoyée respectivement sur un soustracteur 26 et sur un soustracteur 27 qui vient soustraire à la force maximale potentiellement appliquée aux roues, une valeur de force résistive Fᵣₑₛᵢₛₜ. La valeur Fᵣₑₛᵢₛₜ est calculée par une unité de calcul 38 qui peut de manière connue par ailleurs, effectuer un bilan des forces s'exerçant sur le véhicule et de les comparer aux variations d'accélération du véhicule. Les soustracteurs 26 et 27 délivrent donc chacun une valeur de force totale maximale appliquée au véhicule dans le sens de son accélération de déplacement. La valeur issue du soustracteur 26 correspond à la force totale maximale appliquée pendant la phase de stabilisation après le changement de l'état cinématique, et la valeur issue du soustracteur 27 correspond à la force totale maximale appliquée au véhicule pendant le changement d'état cinématique envisagée. Ces valeurs sont envoyées respectivement vers des multiplicateurs 35 et 29 qui les multiplient d'une part par l'inverse 28 de la masse du véhicule -prise par exemple comme une valeur moyenne de la masse du véhicule- et par un incrément de temps-respectivement 34 et 37. L'incrément de temps 34 correspond à un incrément de temps δt₀ correspondant à un temps minimal nécessaire à la stabilisation après un changement d'état cinématique. Cette valeur peut être constante, peut être la même pour tous les changements d'état, ou peut être une valeur variable suivant l'état envisagé ou suivant le changement d'état envisagé. L'intervalle de temps 37 peut correspondre à un intervalle de temps δt_{trans_total} correspondant au temps total nécessaire pour effectuer le changement d'état envisagé. Ce temps total prend notamment en compte un premier intervalle de temps δtₜᵣₐₙₛ envoyé sur un sommateur 31, qui représente le temps nécessaire pour modifier les schémas d'engagement du coupleur et réducteur, et qui est lu par l'unité de commande électronique dans le tableau 23. Il peut également prendre en compte un temps δtₛₜₐᵣₜ qui est envoyé sur le sommateur 31 uniquement si l'état envisagé nécessaire nécessite l'utilisation d'un moteur thermique et s'il faut démarrer ce moteur thermique, ce qui nécessite l'intervalle de temps supplémentaire δtₛₜₐᵣₜ.

Pour calculer l'intervalle de temps δt_{trans_total} l'unité de commande électronique 10 effectue un test 22 pour savoir si, d'une part le moteur thermique 2 est arrêté, et si d'autre part, l'état cinématique envisagé E_cible nécessite l'utilisation du moteur thermique 2. Le résultat du test est une valeur booléenne Bool qui est envoyée sur un multiplicateur 30. Le multiplicateur 30 reçoit sur une autre sortie une valeur 33, notée ici δtₛₜₐᵣₜ, et qui correspond par exemple au temps nécessaire pour démarrer le moteur thermique. Le résultat du multiplicateur 30 est envoyé sur le sommateur 31 qui reçoit sur son autre entrée la valeur δtₜᵣₐₙₛ lue dans le tableau 23 en fonction du couple d'indices E_actu et E_cible. Le résultat du sommateur 31 est ensuite envoyé sur le multiplicateur 29 qui délivre une valeur ΔVₜᵣₐₙₛ correspondant à une estimation de l'incrément de vitesse dont risque de varier la vitesse du véhicule pendant le changement d'état cinématique. De manière similaire, le multiplicateur 35 délivre une valeur ΔV_{stab} correspondant à l'incrément de vitesse dont risque d'être modifiée la vitesse du véhicule pendant le temps δt₀ considéré comme nécessaire à la stabilisation de l'état cinématique. Un sommateur 32 additionne la valeur V de la vitesse actuelle du véhicule et les valeurs ΔV_{stab} et ΔVₜᵣₐₙₛ. Le résultat est une valeur V_fin qui correspond à une estimation de la vitesse finale maximale que risque de prendre le véhicule une fois le changement d'état cinématique effectué, après la phase de stabilisation de l'état cinématique envisagée. La valeur de vitesse V_fin est envoyée vers un test 36 qui compare cette vitesse à une valeur Vseuil (E_cible) qui est lue dans un tableau 13 reliant les états cinématiques envisageable pour la chaîne de transmission et des vitesses maximales admissibles du véhicule pour chacun de ces états cinématiques. Suite au test 36, si la vitesse de fin de changement d'état V_fin est inférieure à la vitesse maximale autorisée Vseuil pour l'état cinématique envisagé, l'unité de commande électronique 10 met à jour une variable, par exemple une variable booléenne Statut, qui est associée à l'état cinématique E_cible, et qui peut par exemple être égal à 1, si l'on autorise une transition vers l'état cinématique E_cible, et qui peut être égal à 0 si l'on interdit une transition vers l'état cinématique E_cible.

On peut envisager des variantes de réalisation dans lesquelles la vitesse V_fin que l'on prend en compte pour la comparer à un seuil, est calculée uniquement en prenant en compte les forces exercées pendant l'état transitoire avant achèvement du changement d'état cinématique.

Cependant du fait des temps de réaction de la chaîne de transmission et du système de gestion associé, une fois un changement d'état cinématique effectué, il s'écoule un temps minimal avant de pouvoir basculer vers un troisième état cinématique. Il est donc avantageux de prendre en compte le gain potentiel de vitesse du véhicule pendant la phase de stabilisation de l'état cinématique envisagé.

On peut également envisager des variantes de réalisation qui tendent à surestimer encore davantage la vitesse en fin de changement d'état cinématique. On peut par exemple envisager des variantes dans lesquelles on ne prend par exemple en compte qu'une seule courbe de force aux roues en fonction de la vitesse du véhicule, cette courbe correspondant alors à l'état cinématique envisagé, sans prendre en compte la courbe correspondant à l'état transitoire. On peut alors envisager de multiplier la plus faible entre cette valeur et la force émanant de la consigne à la pédale, par la somme d'une durée correspondant à un temps nécessaire pour effectuer la transition d'état cinématique et d'un temps nécessaire pour la stabilisation dans cet état cinématique. Selon encore une autre variante de réalisation, on peut ne prendre en compte que la force aux roues correspondant à l'état transitoire.

Dans les cas où la transition d'état cinématique se fait avec une diminution de la vitesse du véhicule, on a également intérêt, pour aller dans le sens de la sécurité, à surestimer la vitesse en fin de changement d'état cinématique et après la stabilisation. La méthode d'évaluation de la force maximale appliquée pendant la transition d'état cinématique et pendant la phase de stabilisation reste pertinente.

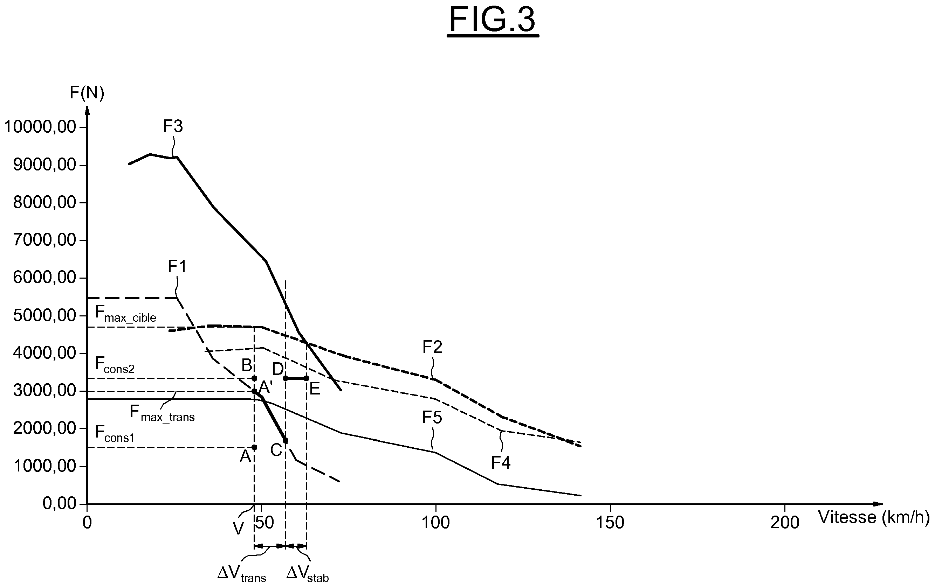

La figure 3 illustre un groupe de courbes correspondant à des cartographies référencées 15 sur les figures 1 et 2, et le positionnement par rapport à ces courbes de quelques points de fonctionnements pris en compte dans le procédé selon l'invention. Ces courbes, dont certaines sont repérées ici par les repères F1, F2, F3, F4, F5, relient chacune la force maximale de traction en Newton qui peut être développée aux roues dans un état cinématique donné, avec la vitesse en Km/h du véhicule. Avant de sélectionner un état envisagé "E_cible" pour étudier son caractère acceptable conformément à l'algorithme 20 de la figure 2, l'unité de commande électronique 10 doit vérifier que le point de fonctionnement demandé (vitesse V du véhicule, force de consigne demandée parle signal pédale) se trouve en dessous de la courbe de l'état cinématique considéré, sinon le couple demandé à la pédale ne pourra être obtenu. Une fois cette vérification effectuée, l'analyse de la figure 2 peut être lancée pour chacun des états cinématiques vérifiant le point précédent.

On a représenté sur la figure 3 des points A, A', B, C, D, E correspondant à des points de fonctionnement caractéristiques au cours d'une transition d'état cinématique. Un instant initial, l'état cinématique en cours correspond à la courbe F1. Le point de fonctionnement du véhicule correspond au point A. Cet état est compatible avec tous les états cinématiques dont les courbes sont illustrées en figure 3. Ce point de fonctionnement A correspond à une vitesse actuelle V du véhicule, et à une force de traction de consigne actuelle F_{cons1}. Le conducteur appuie ensuite sur la pédale d'accélération 9, émettant ainsi une consigne de force de traction correspondant à une valeur F_{cons2}. Le point B représente le point de fonctionnement correspondant pour la même vitesse V. Cette consigne de force de traction F_{cons2} ne peut être obtenue qu'à l'aide des états cinématiques dont les courbes se trouvent au dessus du point B, c'est-à-dire les états cinématiques correspondant aux courbes F2, F3 et F4. On suppose ici que l'unité de commande électronique 10 étudie la possibilité de faire passer la chaîne de transmission de l'état correspondant à la courbe F1, à l'état correspondant à la courbe F2, et que l'état de transition est celui correspondant à la courbe F1 elle-même. Pendant l'intervalle de temps ΔVₜᵣₐₙₛ repéré sur l'axe des abscisses et pendant que s'effectue le changement d'état cinématique, la vitesse du véhicule va normalement évoluer comme la vitesse d'un point de fonctionnement qui se déplace d'un point A' au point C. Le point de fonctionnement A' correspond à l'augmentation maximale possible de la force de traction avant le changement d'état cinématique, et la portion de courbe entre A' et C correspond à la poursuite de l'augmentation de la vitesse du véhicule avec une valeur de couple limitée par la position de la courbe F1. Une fois la transition d'état cinématique effectuée, le point le fonctionnement peut se retrouver en un point D. Le point D a pour abscisse la vitesse du véhicule en fin de transition cinématique, et pour ordonnée la consigne F_{cons2} de couple émanant de la pédale. Comme le point D se trouve en dessous de la courbe F2 du nouvel état cinématique dans lequel on se trouve désormais, le point de fonctionnement du véhicule peut ensuite évoluer suivant l'horizontale D-E correspondant à l'application de la force de consigne à la pédale F_{cons2} pendant l'intervalle de temps δt₀, qui conduit à un accroissement de vitesses de ΔV_{stab}. Ainsi la variation de vitesse obtenue en fin de stabilisation du changement d'état cinématique correspond à la somme d'une variation de vitesse ΔVₜᵣₐₙₛ et d'une variation de vitesse ΔV_{stab}. La variation de vitesse ΔVₜᵣₐₙₛ est ici estimée à partir de la force F_{max_trans} correspondant à l'ordonnée du point A', et l'incrément de vitesse ΔV_{stab} est estimé à partir de la consigne à la pédale F_{cons2} puisque cette consigne est inférieure aux valeurs maximales autorisées par le courbe F2.

L'invention ne se résume pas aux exemples de réalisation décrits et peut se décliner en de nombreuses variantes. Les intervalles de temps correspondant à la stabilisation peuvent être les mêmes pour tous les états cinématiques, ou peuvent être fonction d'états cinématiques d'arrivée, ou peuvent être fonction du couple comprenant l'état initial et l'état cinématique d'arrivée. On peut ne prendre en compte, en plus de la consigne à la pédale, qu'une valeur de force maximale lue sur une seule courbe reliant force et vitesse du véhicule. On pourrait ne pas prendre les minima entre la consigne à la pédale et une force lue sur une cartographie mais encadrer par la valeur supérieure la force exercée en prenant en compte uniquement la force résultant de la consigne à la pédale, ou uniquement une force lue uniquement dans une cartographie. On risque cependant dans ce cas de surestimer souvent la vitesse finale du véhicule et donc d'interdire plus souvent que nécessaire certains états cinématiques. Le procédé de gestion des états cinématiques d'une chaîne de transmission selon l'invention permet de manière simple d'effectuer systématiquement une présélection des états cinématiques envisageables ou non, sans endommager le ou les moteurs du véhicule et sans endommager les éléments de transmission tels que les coupleurs et réducteurs.

## Revendications

1. Procédé de contrôle de l'état d'une chaîne de transmission cinématique d'un véhicule automobile, notamment de véhicule automobile à propulsion hybride, la chaîne cinématique comprenant un ensemble de coupleurs et réducteurs (4, 5) entre un groupe motopropulseur (2, 3) du véhicule et une ou plusieurs roues motrices (6, 7) du véhicule, la chaîne de transmission cinématique pouvant prendre plusieurs états cinématiques (E_actu, E_cible, E_trans) définis chacun par un schéma d'engagements (Rappₜₕ, Rapp_{E}) des coupleurs et réducteurs (4, 5) permettant de relier un moteur (2, 3) du groupe motopropulseur à au moins une roue motrice (6, 7), dans lequel on calcule une vitesse (V_fin) de fin de changement d'état, avant d'effectuer un changement d'état cinématique, en fonction d'une vitesse (V) actuelle du véhicule, de l'état cinématique actuel (E_actu) du véhicule et d'un état cinématique envisagé (E_cible) différent de l'état actuel, et on compare cette vitesse de fin de changement d'état à un seuil (Vseuil), pour calculer la vitesse (V_fin) de fin de changement d'état, on multiplie un premier incrément de temps δt_{tran_total}) par une première force de traction (mAccₜᵣₐₙₛ), **caractérisé en ce que** pour calculer la première force de traction (mAccₜᵣₐₙₛ), on utilise la plus petite valeur d'une force de traction de consigne (F_{cons}) et d'une force de traction (F_{max_trans}) issue d'une première cartographie (15a) reliant la vitesse du véhicule (V) et une force de traction.

2. Procédé selon la revendication 1, dans lequel la première cartographie (15a) est sélectionnée parmi plusieurs cartographies en fonction du couple (E_actu, E_cible) formé par l'état cinématique actuel, et l'état cinématique envisagé.

3. Procédé selon l'une quelconque des revendications précédentes, dans lequel, pour calculer la vitesse (V_fin) de fin de changement d'état, on multiplie en outre un second incrément de temps (δt₀) par une seconde force de traction (mAcc_{cible}).

4. Procédé selon la revendication 3, dans lequel pour calculer la seconde force de traction (mAcc_{cible}), on utilise la plus petite valeur d'une force de traction de consigne (F_{cons}) et d'une force de traction (F_{max_cible}) issue d'une seconde cartographie (15b) reliant la vitesse du véhicule (V) et une force de traction.

5. Procédé de contrôle selon l'une quelconque des revendications 1 à 4, dans lequel, lors du calcul de la vitesse (V_fin) de fin de changement d'état, on soustrait d'au moins une des forces prises en compte (F_{max_cible}, Fₜᵣₐₙₛ, F_{cons}) une force résistive (Fᵣₑₛᵢₜ) calculée notamment en fonction de l'historique d'une force de traction aux roues du véhicule, et d'un historique de vitesse (V) du véhicule.

6. Procédé selon l'une quelconque des revendications précédentes, dans lequel on compare la vitesse (V_fin) de fin de changement d'état à un seuil (Vseuil) qui est fonction de l'état cinématique envisagé (E_cible), et on interdit au moins temporairement le changement d'état vers cet état cinématique (E_cible) si la vitesse (V_fin) de fin de changement d'état est supérieure audit seuil (Vseuil).

7. Système de transmission cinématique pour véhicule automobile (1), notamment pour véhicule automobile à propulsion hybride, le système comprenant un ensemble de coupleurs et réducteurs (4, 5) aptes à relier une ou plusieurs roues motrice (6,7) du véhicule (1) avec un groupe motopropulseur (2, 3) du véhicule (1), la chaîne de transmission cinématique pouvant prendre plusieurs états cinématiques (ER_cible, E_trans, E_actu) définis chacun par un schéma d'engagements des coupleurs et réducteurs (4, 5) permettant de relier un moteur (2, 3) du groupe motopropulseur à au moins une roue motrice (6, 7), le système comprenant une unité de commande électronique (10) configurée pour calculer une vitesse (V_fin) de fin de changement d'état avant d'effectuer un changement d'état cinématique, en fonction d'une vitesse (V) mesurée du véhicule, de l'état cinématique actuel (E_actu) du système de transmission et d'un état cinématique envisagé (E_cible) différent de l'état actuel, et pour comparer la vitesse de fin de changement d'état (V_fin) calculée à un seuil (Vseuil), pour calculer la vitesse (V_fin) de fin de changement d'état, l'unité de commande électronique (10) est configurée pour multiplier un premier incrément de temps (δt_{tran_total}) par une première force de traction (mAccₜᵣₐₙₛ), **caractérisé en ce que** pour calculer la première force de traction (mAccₜᵣₐₙₛ), l'unité de commande électronique (10) est configurée pour utiliser la plus petite valeur d'une force de traction de consigne (F_{cons}) et d'une force de traction (F_{max_trans}) issue d'une première cartographie (15a) reliant la vitesse du véhicule (V) et une force de traction.

8. Véhicule automobile à propulsion hybride comprenant un système de transmission selon la revendication 7, le système de transmission pouvant occuper différents états cinématiques dont au moins un état cinématique dans lequel le couple aux roues peut être fourni au moins partiellement par un premier moteur thermique (2), au moins un état cinématique distinct du précédent dans lequel le couple aux roues peut être fourni au moins partiellement par un moteur électrique (3), ladite unité de commande électronique (10) étant configurée pour interdire, par intervalles de temps, une partie des états cinématiques, en fonction notamment de l'état cinématique actuel (E_actu) du système de transmission, de la vitesse (V) du véhicule et de l'historique de vitesse du véhicule.

## Patentansprüche

1. Verfahren zur Kontrolle des Zustands einer kinematischen Antriebskette eines Kraftfahrzeugs, insbesondere eines Kraftfahrzeugs mit Hybridantrieb, wobei die kinematische Kette eine Einheit von Kopplern und Getrieben (4, 5) zwischen einer Antriebseinheit (2, 3) des Fahrzeugs und einem oder mehreren Antriebsrädern (6, 7) des Fahrzeugs enthält, wobei die kinematische Antriebskette mehrere kinematische Zustände (E_actu, E_cible, E_trans) annehmen kann, die je durch ein Schema von Eingriffen (Rappₜₕ, Rapp_{E}) der Koppler und Getriebe (4, 5) definiert werden, die es ermöglichen, einen Motor (2, 3) der Antriebseinheit mit mindestens einem Antriebsrad (6, 7) zu verbinden, wobei vor der Ausführung einer Änderung eines kinematischen Zustands eine Zustandsänderungsende-Geschwindigkeit (V_fin) abhängig von einer aktuellen Geschwindigkeit (V) des Fahrzeugs, vom aktuellen kinematischen Zustand (E_actu) des Fahrzeugs und von einem angestrebten kinematischen Zustand (E_{_}cible) anders als der aktuelle Zustand berechnet wird, und diese Zustandsänderungsende-Geschwindigkeit mit einer Schwelle (Vseuil) verglichen wird, um die Zustandsänderungsende-Geschwindigkeit (V_fin) zu berechnen, ein erstes Zeitinkrement (δt_{tran_total}) mit einer ersten Zugkraft (mAccₜᵣₐₙₛ) multipliziert wird, **dadurch gekennzeichnet, dass** zur Berechnung der ersten Zugkraft (mAccₜᵣₐₙₛ) der kleinste Wert einer Sollzugkraft (F_{cons}) und einer Zugkraft (F_{max_trans}) verwendet wird, die von einem ersten Kennfeld (15a) stammt, das die Geschwindigkeit des Fahrzeugs (V) und eine Zugkraft verbindet.

2. Verfahren nach Anspruch 1, wobei das erste Kennfeld (15a) unter mehreren Kennfeldern abhängig von dem vom aktuellen kinematischen Zustand und vom angestrebten kinematischen Zustand gebildeten Paar (E_actu, E_cible) ausgewählt wird.

3. Verfahren nach einem der vorhergehenden Ansprüche, wobei zur Berechnung der Zustandsänderungsende-Geschwindigkeit (V_fin) außerdem ein zweites Zeitinkrement (δt₀) mit einer zweiten Zugkraft (mAcc_{cible}) multipliziert wird.

4. Verfahren nach Anspruch 3, wobei zur Berechnung der zweiten Zugkraft (mAcc_{cible}) der kleinste Wert einer Sollzugkraft (F_{cons}) und einer Zugkraft (F_{max_cible}) verwendet wird, die von einem zweiten Kennfeld (15b) stammt, das die Geschwindigkeit des Fahrzeugs (V) und eine Zugkraft verbindet.

5. Kontrollverfahren nach einem der Ansprüche 1 bis 4, wobei bei der Berechnung der Zustandsänderungsende-Geschwindigkeit (V_fin) von mindestens einer der berücksichtigten Kräfte (F_{max_cible}, Fₜᵣₐₙₛ, F_{cons}) eine Widerstandskraft (Fᵣₑₛᵢₜ) subtrahiert wird, die insbesondere abhängig vom Verlauf einer Zugkraft an den Rädern des Fahrzeugs und von einem Verlauf der Geschwindigkeit (V) des Fahrzeugs berechnet wird.

6. Verfahren nach einem der vorhergehenden Ansprüche, wobei die Zustandsänderungsende-Geschwindigkeit (V_fin) mit einer Schwelle (Vseuil) verglichen wird, die vom angestrebten kinematischen Zustand (E_cible) abhängt, und die Zustandsänderung zu diesem kinematischen Zustand (E_cible) zumindest zeitweise verboten wird, wenn die Zustandsänderungsende-Geschwindigkeit (V_fin) höher ist als die Schwelle (Vseuil).

7. Kinematisches Antriebssystem für ein Kraftfahrzeug (1), insbesondere für ein Kraftfahrzeug mit Hybridantrieb, wobei das System eine Einheit von Kopplern und Getrieben (4, 5) enthält, die ein oder mehrere Antriebsräder (6, 7) des Fahrzeugs (1) mit einer Antriebseinheit (2, 3) des Fahrzeugs (1) verbinden können, wobei die kinematische Antriebskette mehrere kinematische Zustände (ER_cible, E_trans, E_actu) annehmen kann, die je durch ein Schema von Eingriffen der Koppler und Getriebe (4, 5) definiert werden, die es ermöglichen, einen Motor (2, 3) der Antriebseinheit mit mindestens einem Antriebsrad (6, 7) zu verbinden, wobei das System eine elektronische Steuereinheit (10) enthält, die konfiguriert ist, vor der Ausführung einer Änderung eines kinematischen Zustands eine Zustandsänderungsende-Geschwindigkeit (V_fin) abhängig von einer gemessenen Geschwindigkeit (V) des Fahrzeugs, vom aktuellen kinematischen Zustand (E_actu) des Antriebssystems und von einem angestrebten kinematischen Zustand (E_{_}cible) anders als der aktuelle Zustand zu berechnen, und die berechnete Zustandsänderungsende-Geschwindigkeit (V_fin) mit einer Schwelle (Vseuil) zu vergleichen, um die Zustandsänderungsende-Geschwindigkeit (V_fin) zu berechnen, wobei die elektronische Steuereinheit (10) konfiguriert ist, ein erstes Zeitinkrement (δt_{tran_total}) mit einer ersten Zugkraft (mAccₜᵣₐₙₛ) zu multiplizieren, **dadurch gekennzeichnet, dass** zur Berechnung der ersten Zugkraft (mAccₜᵣₐₙₛ) die elektronische Steuereinheit (10) konfiguriert ist, den kleinsten Wert einer Sollzugkraft (F_{cons}) und einer Zugkraft (F_{max_trans}) zu verwenden, die von einem ersten Kennfeld (15a) stammt, das die Geschwindigkeit des Fahrzeugs (V) und eine Zugkraft verbindet.

8. Kraftfahrzeug mit Hybridantrieb, das ein Antriebssystem nach Anspruch 7 enthält, wobei das Antriebssystem mehrere kinematische Zustände annehmen kann, darunter mindestens ein kinematischer Zustand, bei dem das Radmoment zumindest teilweise von einem ersten Wärmekraftmotor (2) geliefert werden kann, mindestens ein kinematischer Zustand anders als der vorhergehende, bei dem das Radmoment zumindest teilweise von einem Elektromotor (3) geliefert werden kann, wobei die elektronische Steuereinheit (10) konfiguriert ist, in Zeitintervallen einen Teil der kinematischen Zustände zu verbieten, insbesondere abhängig vom aktuellen kinematischen Zustand (E_actu) des Antriebssystems, von der Geschwindigkeit (V) des Fahrzeugs und vom Verlauf der Geschwindigkeit des Fahrzeugs.

## Claims

1. Method for controlling the state of a drivetrain of a motor vehicle, in particular a motor vehicle with hybrid propulsion, wherein the drivetrain comprises a set of couplers and reducers (4, 5) between a powertrain (2, 3) of the vehicle and one or more drive wheels (6, 7) of the vehicle, the drivetrain being able to assume a plurality of kinematic states (E_actu, E_target, E_trans) each defined by an engagement ratio (Rappₜₕ, Rapp_{E}) of the couplers and reducers (4, 5) allowing the linking of a motor (2, 3) of the powertrain to at least one drive wheel (6, 7), wherein an end speed (V_end) of the change of state is calculated before the kinematic state is changed, as a function of a current speed (V) of the vehicle, the current kinematic state (E_actu) of the vehicle and an intended kinematic state (E_target) different from the current state, and this end speed of the change of state is compared with a threshold (Vthres), in order to calculate the end speed (V_end) of the change of state, a first time increment (δt_{tran_total}) is multiplied by a first traction force (mAccₜᵣₐₙₛ), **characterized in that** in order to calculate the first traction force (mAccₜᵣₐₙₛ), the smallest value is used of a reference traction force (F_{ref}) and a traction force (F_{max_trans}) resulting from a first map (15a) linking the vehicle speed (V) to a traction force.

2. Method according to Claim 1, wherein the first map (15a) is selected from a plurality of maps as a function of the pair (E_actu, E_target) formed by the current kinematic state and the intended kinematic state.

3. Method according to either of the preceding claims, wherein to calculate the end speed (V_end) of the change of state, also a second time increment (δt₀) is multiplied by a second traction force (mAcc_{target}).

4. Method according to Claim 3, wherein to calculate the second traction force (mAcc_{target}), the smallest value is used of a reference traction force (F_{ref}) and a traction force (F_{max_target}) resulting from a second map (15b) linking the vehicle speed (V) to a traction force.

5. Control method according to any of Claims 1 to 4, wherein, when calculating the end speed (V_end) of the change of state, a resistive force (Fᵣₑₛᵢₛₜ), calculated in particular as a function of the history of a traction force at the vehicle wheels and of a history of the speed (V) of the vehicle, is subtracted from at least one of the forces taken into account (F_{max_target}, F_{trans,} F_{ref}).

6. Method according to any of the preceding claims, wherein the end speed (V_end) of the change of state is compared with a threshold (Vthres) which is a function of the intended kinematic state (E_target), and the change of state to this kinematic state (E_target) is prohibited at least temporarily if the end speed (V_end) of the change of state is greater than said threshold (Vthres).

7. Drivetrain system for a motor vehicle (1), in particular a motor vehicle with hybrid propulsion, the system comprising a set of couplers and reducers (4, 5) able to link one or more drive wheels (6, 7) of the vehicle (1) to a powertrain (2, 3) of the vehicle (1), the drivetrain being able to assume a plurality of kinematic states (ER_target, E_trans, E_actu) each defined by an engagement ratio of the couplers and reducers (4, 5) allowing the linking of a motor (2, 3) of the powertrain to at least one drive wheel (6, 7), the system comprising an electronic control unit (10) configured to calculate an end speed (V_end) of the change of state before the kinematic state is changed, as a function of a measured speed (V) of the vehicle, the current kinematic state (E_actu) of the transmission system and an intended kinematic state (E_target) different from the current state, and to compare the calculated end speed (V_end) of the change of state with a threshold (Vthres), in order to calculate the end speed (V_end) of the change of state, the electronic control unit is configured to multiply a first time increment (δt_{tran_total}) is multiplied by a second traction force (mAccₜᵣₐₙₛ), **characterized in that** in order to calculate the second traction force (mAccₜᵣₐₙₛ), the electronic control unit is configured to use the smallest value of a reference traction force (F_{ref}) and a traction force (F_{max_trans}) resulting from a first map (15a) linking the vehicle speed (V) to a traction force.

8. Motor vehicle with hybrid propulsion comprising a transmission system according to Claim 7, wherein the transmission system may occupy different kinematic states including at least one kinematic state in which the torque at the wheels can be provided at least partly by a first internal combustion engine (2), at least one kinematic state different from the first in which the torque at the wheels may be provided at least partly by an electric motor (3), said electronic control unit (10) being configured to prohibit, per time intervals, some of the kinematic states as a function in particular of the current kinematic state (E_actu) of the transmission system, the speed (V) of the vehicle and the history of the speed of the vehicle.
